# EUROPÄISCHE PATENTANMELDUNG

(11) **EP 2 181 760 A1**
(43) Veröffentlichungstag der Anmeldung: **05.05.2010**
(21) Anmeldenummer: 08019273.5
(22) Anmeldetag: 04.11.2008
(51) Int. Cl.: B01J 8/02, B01J 19/00, C01B 3/32, H01M 8/04

(54) **Reformierungsmodul zur Erzeugung eines wasserstoffreichen Prozessgases sowie Verfahren zum Betreiben eines Reformierungsmoduls**

(71) Anmelder: Balcke-Dürr GmbH, 40882 Ratingen (DE)
(72) Erfinder: Podhorsky, Miroslav, Dr., 40882 Ratingen (DE); Korres, Jürgen, 47877 Willich (DE); Holten, Wolfgang, 40629 Düsseldorf (DE)
(74) Vertreter: Lang, Friedrich

(57) **Zusammenfassung**

Die Erfindung betrifft ein Reformierungmodul zur Umsetzung kohlenwasserstoffhaltiger Brenngase in ein wasserstoffreiches Prozessgas, welches einem nachgeschalteten Brennstoffzellenmodul, insbesondere einem Schmelzkarbonatbrennstoffzellenmodul (MCFC), zugeführt wird. Die Erfindung bezieht sich auch auf ein Verfahren zum Betreiben eines Reformierungsmoduls zur Erzeugung eines wasserstoffreichen Prozessgases. Um eine Beschädigung nachgeschalteter Module, beispielsweise Brennstoffzellenmodul, Abgasnachbehandlungsmodul etc., zu vermeiden, werden die Austrittstemperaturen der aus dem Reformierungsmodul austretenden Gase, insbesondere des Verbrennungsabgases und/oder des wasserstoffreichen Prozessgases, auf einen gewünschten Wert eingestellt.

## Beschreibung

Die Erfindung betrifft ein Reformierungmodul zur Umsetzung kohlenwasserstoffhaltiger Brenngase in ein wasserstoffreiches Prozessgas, welches einem nachgeschalteten Brennstoffzellenmodul, insbesondere einem Schmelzkarbonatbrennstoffzellenmodul (MCFC), zugeführt wird. Die Erfindung bezieht sich auch auf ein Verfahren zum Betreiben eines Reformierungsmoduls zur Erzeugung eines wasserstoffreichen Prozessgases.

Brennstoffzellen gewinnen aufgrund der hohen Effizienz und der vorteilhaften Minimierung von schädlichen Abgasen immer mehr an Beliebtheit. Da der Transport von reinem Wasserstoff in Druckbehältern, insbesondere für mobile Anwendungen, immer noch aus sicherheitstechnischen Gründen als gefährlich betrachtet wird, ist es aus dem Stand der Technik bekannt, Wasserstoff nach Bedarf "vor Ort" durch Dampfreformierung zu erzeugen.

Ein herkömmliches Reformierungsmodul ist beispielsweise in der Patentschrift EP 1517389 B1 der Anmelderin zu finden. Dieses Reformierungsmodul verbindet optimal die Vorteile der externen Reformierung mit den Vorteilen des innigen thermischen Kontakts der internen Reformierung. Es besteht dennoch Bedarf an noch kompakteren Reformierungsmodulen.

Der Erfindung liegt daher die Aufgabe zugrunde, ein Reformierungsmodul der eingangs genannten Art anzugeben, welches einen hohen Grad an Kompaktheit aufweist und welches gleichzeitig in der Lage ist, die Austrittstemperaturen der aus dem Reformierungsmodul austretenden Gase, insbesondere des wasserstoffreichen Prozessgases und des Verbrennungsabgases, in einem vorgegebenen Bereich schnell und zuverlässig einzustellen, so dass die thermischen Belastungen in den Modulen, die dem Reformierungsmodul nachgeschaltet sind, zu minimieren. Zusätzlich ist es Aufgabe der Erfindung ein Verfahren zum Betreiben des erfindungsgemäßen Reformierungsmoduls anzugeben.

Die Aufgabe der Erfindung wird gelöst durch den Gegenstand der unabhängigen Ansprüche 1 und 8. Die abhängigen Ansprüche sind auf vorteilhafte Ausführungsformen der Erfindung gerichtet.

Das erfindungsgemäße Reformierungsmodul umfasst Einlässe für Anoden- und Kathodengas, welche von einem Brennstoffzellenmodul kommen; einen Einlass für kohlenwasserstoffhaltiges Brenngas zur Erzeugung eines wasserstoffreichen Prozessgases; einen Auslass für Verbrennungsabgas, welches bei der katalytischen Verbrennung von Anoden- und Kathodengas entsteht; einen Reformer, in welchem durch Dampfreformierung ein wasserstoffreiches Prozessgas gebildet wird; einen Auslass für wasserstoffreiches Prozessgas, welches einem Brennstoffzellenmodul zugeführt wird; einen Brenner zur katalytischen Verbrennung von Methanresten aus dem Anodengas; Mischer zur Durchmischung von Gasströmen; Wärmetauscher; Mittel zur Messung von Temperaturen; einen Einlass für Wasser; einen Auslass für Wasserdampf sowie eine Steuerungseinheit. Ferner sind innerhalb des Reformierungsmoduls vorzugsweise Rohrleitungen für Gase bzw. Flüssigkeiten angeordnet. Darüber hinaus befinden sich im Reformierungsmodul auch Signalleitungen, die die Steuerungseinheit mit den verschiedenen Sensoren, beispielsweise Druck- oder Temperaturaufnehmer, und mit den verschiedenen Aktuatoren, beispielsweise Ventile, verbinden.

Mittels des erfindungsgemäßen Reformierungsmoduls werden neben der eigentlichen Reformierung noch weitere wichtige Funktionen erfüllt. Die katalytische Verbrennung der Methanreste aus dem Anodengas ist ebenso integriert wie auch die Erzeugung des für die Dampfreformierung benötigten Wasserdampfes. Ebenso ist auch die Vorwärmung des kohlenwasserstoffhaltigen Brennstoffes zur Erzeugung des wasserstoffreichen Prozessgases integriert. Durch die erfindungsgemäße Anordnung der einzelnen Komponenten weist das Reformierungsmodul einen äußerst hohen Grad an Kompaktheit auf und eignet sich hervorragend zur mobilen Anwendung. Mittels thermischer Kopplung der Stoffströme über Wärmetauscher wird die Wärmeenergie, die normalerweise als Abwärme verloren gehen würde, optimal ausgenutzt, so dass auch ein erhöhter Wirkungsgrad erzielt wird.

Erfindungsgemäß ist die Austrittstemperatur des Verbrennungsabgases als eine Funktion des Volumenstroms von Wasser einstellbar. Wasser weist im Vergleich zu Gasen eine wesentlich höhere, spezifische Wärmekapazität auf. Daher kann Wasser sehr gut als Kühlmittel eingesetzt werden. Diese Eigenschaft wird bei der vorliegenden Erfindung vorteilhaft ausgenutzt. Eine zu hohe Austrittstemperatur des Verbrennungsabgases oder extreme Temperaturgradienten führen zu thermischen Belastungen bei angeschlossenen Aggregaten, die nach einer Zeit beschädigt werden können. Daher muss diese Temperatur kontrolliert werden. In einem Wärmetauscher kann die Wärme vom heißen Verbrennungsabgas auf das eintretende Wasser schnell und sicher übertragen werden. Die Wärmeübertragung lässt sich effektiv und ohne Verzögerung direkt über die Regulierung des Wasservolumenstroms beeinflussen. Dabei wird zweckmäßigerweise im gleichen Wärmetauscher der für die Dampfreformierung nötige Wasserdampf gebildet.

Vorzugsweise ist die Austrittstemperatur des wasserstoffreichen Prozessgases als eine Funktion des Volumenstroms von Wasser einstellbar. Die Austrittstemperatur des Prozessgases kann zusätzlich oder alternativ zur Austrittstemperatur des Verbrennungsabgases einstellbar sein. Die Begrenzung der Austrittstemperatur des Prozessgases und die Vermeidung von hohen Temperaturgradienten führt zu mehr Betriebssicherheit und höherer Lebensdauer des Brennstoffzellenmoduls.

Gemäß einer bevorzugten Ausführungsform der Erfindung ist der Volumenstrom des Wassers durch ein Ventil einstellbar. Mit Hilfe eines Ventils, beispielsweise eines Strom- bzw. Mengenregelventils kann auf einfache und schnelle Weise der Volumenstrom des in den jeweiligen Wärmetauscher eintretenden Wassers eingestellt werden. Die Einstellung der Austrittstemperaturen des Verbrennungsabgases bzw. des wasserstoffreichen Prozessgases kann je nach Anwendungsfall gesteuert oder geregelt erfolgen.

Vorzugsweise sind die Austrittstemperaturen des Verbrennungsabgases bzw. des wasserstoffreichen Prozessgases mittels der Variation des Volumenstroms von Wasser auf einen konstanten Wert regelbar. Hierdurch werden gefährliche Temperaturspitzen- bzw. schwankungen vermieden.

Gemäß einer bevorzugten Ausführungsform der Erfindung weist das Reformierungsmodul eine ansteuerbare Teilvorrichtung, beispielsweise Ventil mit Bypass, Wegeventil etc., für Kathodengas auf, welche das eintretende Kathodengas in einen ersten und einen zweiten Kathodengasteilstrom aufteilt, wobei der Volumenstrom des ersten Kathodengasteilstroms, welcher mit dem Anodengas im Mischer gemischt und anschließend dem katalytischen Brenner zugeführt wird, in Abhängigkeit vom Anodengas einstellbar ist. Dies führt zu einer besseren Verbrennung des Anodengases im katalytischen Brenner. Dadurch können das Reformierungsmodul volumenmäßig optimiert und das kostenintensive Katalysatormaterial eingespart werden.

Gemäß einer weiteren bevorzugten Ausführungsform der Erfindung weist das Reformierungsmodul eine ansteuerbare Bypassvorrichtung auf, beispielsweise Ventil mit Bypass, Wegeventil etc., welche den Wasserdampf in einen ersten und einen zweiten Wasserdampfteilstrom aufteilt, wobei der Volumenstrom des ersten Wasserdampfteilstroms, welcher zur Dampfreformierung dem Reformer zugeführt wird, einstellbar ist. Dadurch kann der Wasserdampfvolumenstrom, der tatsächlich zur Dampfreformierung mit dem kohlenwasserstoffhaltigen Brenngas vermischt wird, auf einfache Weise reguliert werden. Der überschüssige Wasserdampf wird einfach über einen Bypass aus dem Reformierungsmodul entfernt.

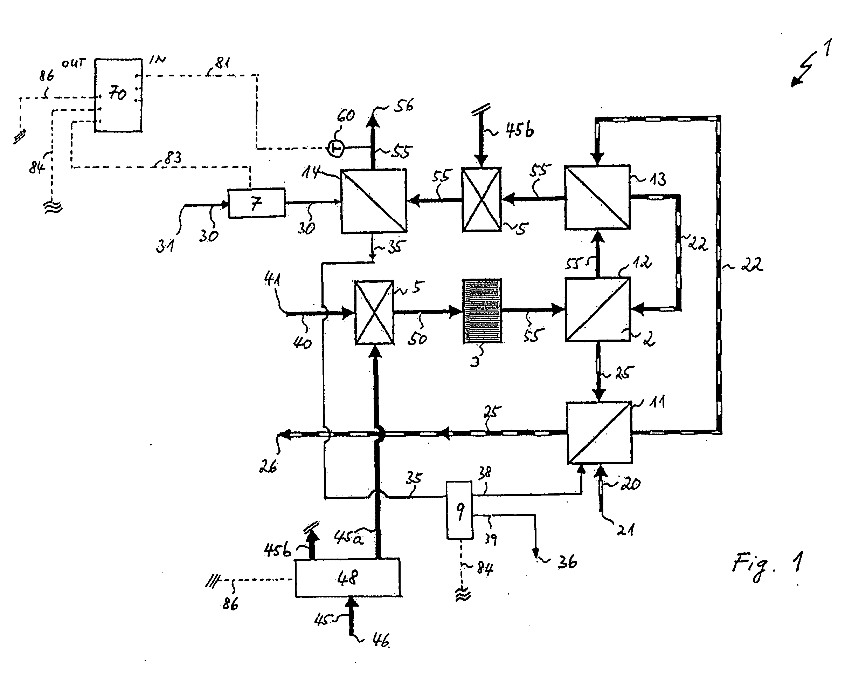

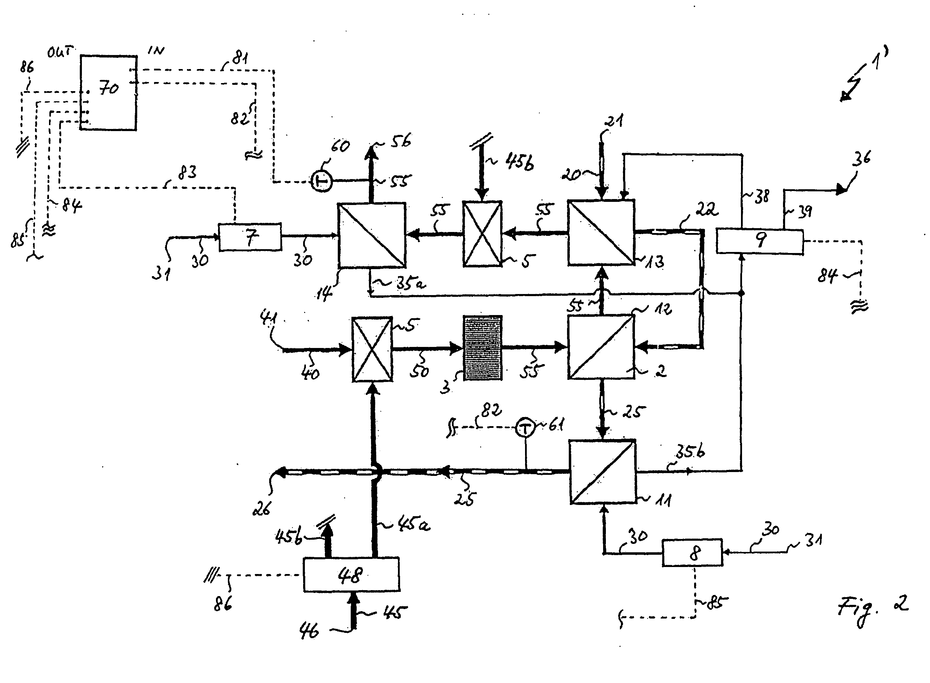

Nachfolgend wird die Erfindung anhand von zwei in den Zeichnungen dargestellten Ausführungsbeispielen näher erläutert. Fig. 1 und Fig. 2 zeigen schematisch jeweils ein Ausführungsbeispiel eines Reformierungsmoduls.

Figur 1 zeigt schematisch den Aufbau eines ersten, erfindungsgemäßen Ausführungsbeispiels. Kohlenwasserstoffhaltiger Brennstoff, insbesondere kohlenwasserstoffhaltiges Brenngas 20 wie z. B. Methan, tritt über einen Einlass 21 für Brenngas 20 in ein Reformierungsmodul 1. Zusammen mit einem ersten Wasserdampfteilstrom 38, welcher intern im Reformierungsmodul 1 erzeugt wird, wird das Brenngas 20 in einem ersten Wärmetauscher 11 auf circa 150 bis 200 °C vorgewärmt. Ein Brenngas-Wasserdampf-Gemisch 22 strömt zu einem zweiten Wärmetauscher 13 und wird dort weiter erhitzt, bevor es in einen Reformer 2 eintritt. Die Bildung von wasserstoffreichem Prozessgas 25 mittels Dampfreformierung erfolgt endotherm und erfordert daher neben den Edukten Brenngas 20 und Wasserdampf 38 auch Wärmezufuhr von außen. Daher ist der Reformer 2 eng mit einem dritten Wärmetauscher 12 verknüpft, in welchem die hohe Wärmeenergie eines Verbrennungsabgases 55 auf den Reformer 2 übertragen wird. Ein wasserstoffreiches Prozessgas 25 tritt mit einer Temperatur von ungefähr 700 °C aus dem Reformer 2 und gibt im ersten Wärmetauscher 11 einen Teil seiner Wärmeenergie an das Brenngas-Wasserdampf-Gemisch 22 ab, so dass es mit einer Temperatur von ungefähr 650 °C über einen Auslass für Prozessgas 26 aus dem Reformierungsmodul 1 austritt und einem nachgeschalteten Brennstoffzellenmodul (hier nicht gezeigt) zugeführt wird.

Erfindungsgemäß wird der Volumenstrom des Wassers 30, welches über einen Einlass für Wasser 31 in das Reformierungsmodul 1 eintritt, so gesteuert oder geregelt, dass die Austrittstemperatur des Verbrennungsabgases 55, welche mittels eines Thermoelements 60 gemessen und über eine Signalleitung 81 an eine Steuerungseinheit 70 übermittelt wird, einen vorzugebenden Grenzwert nicht überschreitet bzw. in einem vorzugebenden Bereich konstant gehalten wird. Die Steuerungseinheit 70 umfasst diverse Eingänge, die über die Signalleitungen 81 mit Sensoren wie z. B. Thermoelemente 60, Druckaufnehmer (hier nicht gezeigt) etc. verbunden sind, und diverse Ausgänge, die ebenfalls über Signalleitungen 83, 84, 86 mit den Aktuatoren wie z. B. Ventil 7, Teilvorrichtung 48 oder Bypassvorrichtung 9 etc. verbunden sind.

Die Austrittstemperatur des Verbrennungsabgases 55, welches das Reformierungsmodul 1 über den Auslass für Verbrennungsabgas 56 verlässt, wird vorzugsweise in einem Bereich von 450 bis 650 °C eingestellt. Eine zu hohe Temperatur stellt eine starke, thermische Gefährdung der nachgeschalteten Module, beispielsweise Ventilatormodul, Abgasnachbehandlungsmodul (beide hier nicht gezeigt) dar und sollte daher vermieden werden, um Betriebssicherheit und Lebensdauer der Gesamtanlage zu erhöhen.

In Abhängigkeit der einzustellenden Austrittstemperatur des Verbrennungsabgases 55 wird ein Ventil 7 so angesteuert, dass der Volumenstrom von Wasser 30 variiert wird. In einem vierten Wärmetauscher 14 findet die Wärmeübertragung vom Verbrennungsabgas 55 auf das Wasser 30 statt. Dabei wird je nach Betriebspunkt Wasserdampf 35, ein Nassdampf mit einer Temperatur von 150 bis 180 °C und einem Absolutdruck von circa 3 bar, gebildet, der sowieso für die Dampfreformierung im Reformer 2 hätte erzeugt werden müssen. Der vierte Wärmetauscher 14 erfüllt also neben der Funktion der Wärmeübertragung zur Steuerung bzw. Regelung der Austrittstemperatur des Verbrennungsabgases 55 auch die Funktion des Dampferzeugers. Der Wasserdampf 35 wird in einer ansteuerbaren Bypassvorrichtung 9 in zwei Wasserdampfteilströme 38, 39 aufgeteilt. Dabei wird ein überschüssiger Teilstrom 39, der das Reformierungsmodul 1 über einen Auslass für Wasserdampf 36 verlässt, so eingestellt, dass das Brenngas-Wasserdampf-Gemisch 22 einem gewünschten Mischungsverhältnis entspricht.

Es ist hinlänglich bekannt, dass die Wärmeenergie, die durch die exotherme, elektrochemische Reaktion im Brennstoffzellenmodul erzeugt wird, genutzt werden kann, um den Wärmebedarf der Reformierungsreaktion zu decken. Es ist auch bekannt, zusätzlich in einem katalytischen Brenner 3 Anodengas 40, wie z. B. unverbrauchte Kohlenwasserstoffe (HCs), Wasserstoff (H₂), Kohlenstoffmonoxid (CO) etc., mit einem Kathodengas 45, wie z. B. Luft, katalytisch zu verbrennen, um zum einen den Energiegehalt der Brennstoffzellenabgase 40, 45 auszunutzen und zum anderen die Abgasemission zu senken. Beim erfindungsgemäßen Reformierungsmodul 1 wird das Kathodengas 45, welches von der Kathode der Brennstoffzelle kommend über einen Einlass für Kathodengas 46 in das Reformierungsmodul 1 eintritt, in einer ansteuerbaren Teilvorrichtung 48 in zwei Kathodengasteilströme 45a, 45b aufgeteilt. Der Teilstrom 45a wird mit dem Anodengas 40, welches von der Anode der Brennstoffzelle kommend über einen Einlass für Anodengas 41 in das Reformierungsmodul 1 eintritt, in einem Mischer 5 vermischt, so dass ein für die Verbrennung im katalytischen Brenner 3 optimales Mischungsverhältnis vom Anodengas-Kathodengas-Gemisch 50 gebildet wird. Der überschüssige Kathodengasteilstrom 45b wird in einem weiteren Mischer 5 mit dem Verbrennungsabgas 55 vermischt, so dass die Wärmeenergie anschließend im vierten Wärmetauscher 14 ausgenutzt werden kann. Durch die Aufteilung des Kathodengasvolumenstromes 45 wird eine bessere Verbrennung des im Anodengas 40 befindlichen, brennbaren Gases, beispielsweise Methan, erreicht. Gleichzeitig eröffnet sich die Möglichkeit einer volumenmäßigen Optimierung des Reformierungsmoduls 1 und damit auch die kostenmäßige Optimierung des Katalysators, welcher beispielsweise im Brenner 3 und Reformer 2 eingesetzt wird.

Figur 2 zeigt ein zweites Ausführungsbeispiel eines zweiten Reformierungsmoduls 1'. Das hier gezeigte Ausführungsbeispiel unterscheidet sich vom ersten Ausführungsbeispiel hauptsächlich darin, dass neben der Austrittstemperatur des Verbrennungsabgases 55 auch die Austrittstemperatur des wasserstoffreichen Prozessgases 25 über den Volumenstrom des Wassers 30 einstellbar ist. Hierzu wird ein ansteuerbares Ventil 8 verwendet, welches den Volumenstrom des in den Wärmetauscher 11 eintretenden Wassers 30 reguliert. Ähnlich wie bei der Anpassung der Wärmeübertragung im vierten Wärmetauscher 14 wird auch die Wärmeübertragung im ersten Wärmetauscher 11 so angepasst, dass die Temperatur des wasserstoffreichen Prozessgases, welche über ein Thermoelement 61 gemessen und über eine Signalleitung 82 an die Steuerungseinheit 70 übertragen wird, einen vorzugebenden Grenzwert nicht übersteigt bzw. in einem gewünschten Bereich konstant gehalten wird. Vorzugsweise wird eine konstante Austrittstemperatur von circa 450 bis 650 °C angestrebt, um eine Beschädigung der Brennstoffzellenstacks infolge zu hoher Prozessgastemperaturen bzw. Temperaturgradienten zu vermeiden.

Wasserdampfströme 35a, 35b können, wie in Fig. 2 gezeigt, zusammengeführt werden und durch eine ansteuerbare Bypassvorrichtung 9 in zwei Wasserdampfteilströme 38, 39 aufgeteilt werden. Der Volumenstrom des Wasserdampfteilstroms 38 kann so variiert werden, dass stets ein gewünschtes Mischungsverhältnis im Brenngas-Wasserdampf-Gemisch 22 vorliegt. Es ist auch möglich, die Wasserdampfströme 35a, 35b separat in den zweiten Wärmetauscher 13 münden zu lassen. In diesem Fall würden die Volumenströme der Wasserdampfströme 35a, 35b jeweils über eine separate Bypassvorrichtung 9 eingestellt werden. Es ist je nach Anwendungsfall ferner auch möglich, nur die Austrittstemperatur des Prozessgases 25 zu kontrollieren.

## Patentansprüche

1. Reformierungsmodul (1) mit einem Wärmetauscher (14), in welchem Wärme von einem Verbrennungsabgas (55) auf Wasser (30) übertragen wird, wobei der Volumenstrom des in den Wärmetauscher (14) eintretenden Wassers (30) über eine Steuerungseinheit variierbar ist, so dass die Austrittstemperatur des aus dem Wärmetauscher (14) austretenden Verbrennungsabgases (55) in Abhängigkeit vom Volumenstrom des Wassers (30) einstellbar ist.

2. Reformierungsmodul (1) nach Anspruch 1,
wobei das Reformierungsmodul (1) einen weiteren Wärmetauscher (11) aufweist, in welchem Wärme von einem wasserstoffreichen Prozessgas (25) auf Wasser (30) übertragen wird, wobei der Volumenstrom des in den Wärmetauscher (11) eintretenden Wassers (30) über eine Steuerungseinheit variierbar ist, so dass die Austrittstemperatur des aus dem Wärmetauscher (11) austretenden, wasserstoffreichen Prozessgases (25) in Abhängigkeit vom Volumenstrom des Wassers (30) einstellbar ist.

3. Reformierungsmodul (1) nach einem der vorhergehenden Ansprüche,
wobei der Volumenstrom des Wassers (30) durch ein Ventil (7, 8) variierbar ist.

4. Reformierungsmodul (1) nach einem der vorhergehenden Ansprüche,
wobei die Austrittstemperatur des Verbrennungsabgases (55) mittels der Variation des Volumenstroms von Wasser (30) auf einen konstanten Wert regelbar ist.

5. Reformierungsmodul (1) nach einem der vorhergehenden Ansprüche,
wobei die Austrittstemperatur des wasserstoffreichen Prozessgases (25) mittels der Variation des Volumenstroms von Wasser (30) auf einen konstanten Wert regelbar ist.

6. Reformierungsmodul (1) nach einem der vorhergehenden Ansprüche,
wobei das Reformierungsmodul (1) eine Teilvorrichtung (48) für Kathodengas (45) aufweist, welche das Kathodengas (45) in einen ersten und einen zweiten Kathodengasteilstrom (45a, 45b) aufteilt, wobei der Volumenstrom des ersten Kathodengasteilstroms (45a), welcher mit einem Anodengas (40) gemischt wird, in Abhängigkeit vom Volumenstrom des Anodengases (40) einstellbar ist.

7. Reformierungsmodul (1) nach einem der vorhergehenden Ansprüche,
wobei das Reformierungsmodul (1) eine Bypassvorrichtung (9) aufweist, welche den Wasserdampf (35) in einen ersten und einen zweiten Wasserdampfteilstrom (38, 39) aufteilt, wobei der Volumenstrom des ersten Wasserdampfteilstroms (38), welcher mit einem kohlenwasserstoffhaltigen Brenngas (20) zur Dampfreformierung einem Reformer (2) zugeführt wird, in Abhängigkeit vom Volumenstrom des kohlenwasserstoffhaltigen Brenngases (20) einstellbar ist.

8. Verfahren zum Betreiben eines Reformierungsmoduls (1) mit einem Wärmetauscher (14), in welchem Wärme von einem Verbrennungsabgas (55) auf Wasser (30) übertragen wird, wobei der Volumenstrom des in den Wärmetauscher (14) eintretenden Wassers (30) über eine Steuerungseinheit variiert wird, so dass die Austrittstemperatur des aus dem Wärmetauscher (14) austretenden Verbrennungsabgases (55) in Abhängigkeit vom Volumenstrom des Wassers (30) eingestellt wird.

9. Verfahren nach Anspruch 8,
mit einem weiteren Wärmetauscher (11), in welchem Wärme von einem wasserstoffreichen Prozessgas (25) auf Wasser (30) übertragen wird, wobei der Volumenstrom des in den Wärmetauscher (11) eintretenden Wassers (30) über eine Steuerungseinheit variiert wird, so dass die Austrittstemperatur des aus dem Wärmetauscher (11) austretenden, wasserstoffreichen Prozessgases (25) in Abhängigkeit vom Volumenstrom des Wassers (30) eingestellt wird.

10. Verfahren nach einem der vorhergehenden Ansprüche 8 bis 9,
wobei der Volumenstroms des Wassers (30) durch ein Ventil (7, 8) variiert wird.

11. Verfahren nach einem der vorhergehenden Ansprüche 8 bis 10,
wobei die Austrittstemperatur des Verbrennungsabgases (55) mittels der Variation des Volumenstroms von Wasser (30) auf einen konstanten Wert geregelt wird.

12. Verfahren nach einem der vorhergehenden Ansprüche 8 bis 11,
wobei die Austrittstemperatur des wasserstoffreichen Prozessgases (25) mittels der Variation des Volumenstroms von Wasser (30) auf einen konstanten Wert geregelt wird.

13. Verfahren nach einem der vorhergehenden Ansprüche 8 bis 12,
wobei im Reformierungsmodul (1) ein Kathodengas (45) über eine Teilvorrichtung (48) in einen ersten und einen zweiten Kathodengasteilstrom (45a, 45b) aufgeteilt wird, wobei der Volumenstrom des ersten Kathodengasteilstromes (45a), welcher mit einem Anodengas (40) gemischt wird, in Abhängigkeit vom Volumenstrom des Anodengases (40) eingestellt wird.

14. Verfahren nach einem der vorhergehenden Ansprüche,
wobei im Reformierungsmodul (1) der Wasserdampf (35) über eine Bypassvorrichtung (9) in einen ersten und einen zweiten Wasserdampfteilstrom (38, 39) aufgeteilt wird, wobei der Volumenstrom des ersten Wasserdampfteilstroms (38), welcher mit einem kohlenwasserstoffhaltigen Brenngas (20) zur Dampfreformierung dem Reformer (2) zugeführt wird, in Abhängigkeit vom Volumenstrom des kohlenwasserstoffhaltigen Brenngases (20) eingestellt wird.
